# EUROPÄISCHE PATENTSCHRIFT

(11) **EP 2 780 603 B1**
(45) Veröffentlichungstag und Bekanntmachung des Hinweises auf die Patenterteilung: **02.11.2016**
(21) Anmeldenummer: 12756699.0
(22) Anmeldetag: 04.09.2012
(51) Int. Cl.: F16B 11/00, F16B 5/06

(54) **VERBINDUNGSANORDNUNG ZWISCHEN EINEM KUNSTSTOFF-BAUTEIL UND EINEM ANDEREN BAUELEMENT**
CONNECTING ARRANGEMENT BETWEEN A PLASTIC COMPONENT AND ANOTHER STUCTURAL ELEMENT
ENSEMBLE PERMETTANT DE RELIER UNE PIÈCE EN MATIÈRE PLASTIQUE ET UN AUTRE ÉLÉMENT STRUCTURAL

(30) Priorität: 17.11.2011 DE 102011086543
(43) Veröffentlichungstag der Anmeldung: 24.09.2014
(73) Patentinhaber: Bayerische Motoren Werke Aktiengesellschaft, 80809 München (DE)
(72) Erfinder: STANGL, Matthias, 85221 Dachau (DE)
(86) Internationale Anmeldenummer: PCT/EP2012/067172
(87) Internationale Veröffentlichungsnummer: WO 2013/072083

(56) Entgegenhaltungen:
- WO-A1-2010/001738
- SCHIEVENBUSCH F: "BEITRAG ZU HOCHBELASTETEN KRAFTEINLEITUNGSELEMENTEN FUR FASERVERBUNDBAUTEILE", INTERNET CITATION, 2003, XP002390184, Gefunden im Internet: URL:http://archiv.tu-chemnitz.de/pub/2003/ 0119/data/Dissertation_Schievenbusch_2003_ 09_10.pdf [gefunden am 2006-01-01]

## Beschreibung

Die Erfindung betrifft eine Verbindungsanordnung zwischen einem Kunststoff-Bauteil mit zumindest zwei einander benachbarten und zumindest annähernd parallelen Wänden und einem anderen Bauelement, mit zumindest einem über eine Klebeverbindung am Kunststoff-Bauteil in kegelstumpfförmigen oder kugelsegmentförmigen Senken in den einander benachbarten Wänden des Kunststoff-Bauteils mit diesem verklebten Krafteinleitungselement, welches eine Tragstruktur für das andere Bauelement aufweist oder bildet. Zum Stand der Technik wird auf die DE 103 05 015 A1 verwiesen.

Im Zuge der Leichtbau-Bestrebungen im Fahrzeug-Bau werden auch größere Karosserie-Strukturbauteile und sogar gesamte Fahrzeug-Aufbauten aus faserverstärktem Kunststoff hergestellt. Jedoch gibt es auch bei Kraftfahrzeugen, beispielsweise Personenkraftwagen, mit Kunststoff-Karosserien weiterhin Bauelemente, die an der Fahrzeug-Kunststoff-Struktur befestigt sind und relativ große Kräfte und/oder Momente in diese Struktur bzw. in das Strukturbauteil einleiten. Aus der eingangs genannten Schrift ist eine auf eine günstige Krafteinleitung hin optimierte Krafteinleitungsvorrichtung für ein Kunststoff-Strukturbauteil bekannt, wobei dieses Strukturbauteil auch zweischalig ausgebildet sein kann, d.h. zwei zueinander zumindest annähernd parallele Wände aufweist, und wobei sich die Krafteinleitungseinrichtung an den beiden Wänden des Strukturbauteils in Senken abstützt und hierfür mit diesen verklebt ist. Diese bekannte Krafteinleitungseinrichtung ist in Hybridbauweise ausgeführt und daher relativ aufwändig; etwas aufwändig ist bei diesem Stand der Technik ferner die Anordnung bzw. Montage der Krafteinleitungseinrichtung an den beiden Wänden des Kunststoff-Strukturbauteils.

Eine Krafteinleitungseinrichtung für ein Kunststoff-Bauteil mit zumindest zwei einander benachbarten und zumindest annähernd parallelen Wänden bzw. eine Verbindungsanordnung zwischen einem solchen Kunststoff-Bauteil und einem anderen Bauelement, insbesondere im Bereich des Fahrzeug-Baus aufzuzeigen, welche relativ einfach gestaltet und insbesondere einfach montierbar ist, ist Aufgabe der vorliegenden Erfindung.

Die Lösung dieser Aufgabe ist für eine Verbindungsanordnung nach dem Oberbegriff des Anspruchs 1 dadurch gekennzeichnet, dass das Krafteinleitungselement abgesehen von einer ggf. vorgesehenen Beschichtung aus metallischem Werkstoff besteht und einen an die kegelstumpfförmige oder kugelsegmentförmige Senke in der dem anderen Bauelement benachbarten äußeren Wand des Kunststoff-Bauteils angepassten und somit in dieser Senke unter Zwischenlage einer Klebstoffschicht an der Wand des Kunst-stoff-Bauteils anliegenden Teller aufweist, dessen Rand unter Zwischenlage von Klebstoff auf der äußeren Wand im Umgebungsbereich der Senke aufliegt, wobei der Teller über einen Steg mit einem an die kegelstumpfförmige oder kugelsegmentförmige Senke in der anderen inneren Wand des Kunststoff-Bauteils angepassten Endabschnitt des Krafteinleitungselements verbunden ist und die Senke in der äußeren Wand jedenfalls soweit ohne Boden ausgeführt ist, dass der Endabschnitt des Krafteinleitungselements durch die äußere Wand hindurch in die Senke der inneren Wand unter Zwischenlage einer Klebstoffschicht einsetzbar ist, und dass die Tragstruktur an den Teller und/oder in den Steg des Krafteinleitungselements geformt ist.

Zunächst ist ein einfach herstellbares und gleichzeitig ausreichend massives Krafteinleitungselement bzw. Verbindungselement geschaffen, indem dieses praktisch nur aus metallischem Werkstoff besteht bzw. aus einem solchen geformt ist. Gegebenenfalls kann es zur Verhinderung von Korrosion jedoch erforderlich sein, die Oberfläche des metallischen Krafteinleitungselements zu beschichten, d.h. mit einer geeigneten Schutzschicht zu überziehen. Am metallischen Grundwerkstoff des somit nicht aus einer Kombination von Metall und Nichtmetall aufgebauten Krafteinleitungselements ändert dies jedoch nichts.

Klebeverbindungen zwischen diesem metallischen Werkstoff bzw. der Oberflächenbeschichtung des Krafteinleitungselements und dem faserverstärkten Kunststoff-Material des Kunststoff-Strukturbauteils sind ebenfalls einfach darstellbar und sind aufgrund der beiden bspw. kegelstumpfförmigen Verbindungsbereiche in den Senken der beiden einander benachbarten Wände des Kunststoff-Bauteils, die aus geraden Kreiskegeln gebildet sein können, bereits ausreichend sicher haltbar. Sind hingegen die kegelstumpfförmigen Verbindungsbereiche aus Kegeln mit elliptischer Grundfläche gebildet oder aus geneigten Kegeln, so kann damit eine weiter gesteigerte Verdrehsicherheit des Krafteinleitungselements gegenüber dem Kunststoff-Bauteil erzielt werden. Sollte eine solche gesteigerte Verdrehsicherheit nicht erforderlich sein, kann anstelle des kegelstumpfförmigen Verbindungsbereichs auch ein kugelsegmentförmiger Verbindungsbereich zwischen einer kugelsegmentförmigen Senke und einem entsprechend angepasst als Kugelsegment geformten Abschnitt oder Teller des Krafteinleitungselements vorgesehen sein, wobei eine solche Kugelsegment-Form relativ einfach darstellbar sein kann. In diesem Zusammenhang sei ein weiterer Vorteil genannt, der sich aus der Kegelstumpf-Form oder Kugelsegment-Form des Verbindungsbereichs zwischen dem Krafteinleitungselement und dem Kunststoff-Bauteil bzw. den in dieses eingeformten Senken in dessen Wänden ergibt, nämlich eine signifikante Vergrößerung der Klebefläche, d.h. derjenigen Fläche, in welcher die Klebstoffschicht wirken kann.

Indem der Teller des Krafteinleitungselements, der in einer kegelstumpfförmigen oder kugelsegmentförmigen Senke der äußeren, dem zu befestigenden Bauelement benachbarten Wand des Kunststoff-Bauteils liegt, zusätzlich mit seinem Randbereich auf dieser äußeren Wand im Umgebungsbereich der Senke aufliegt, ist das Krafteinleitungselement auch für die Einleitung bzw. Aufnahme von Momenten stabil am Kunststoff-Bauteil bzw. zumindest an dessen äußerer Wand abgestützt. Dabei kann ein erfindungsgemäßes Krafteinleitungselement einfach in ein entsprechendes Kunststoff-Bauteil mit zumindest zwei einander benachbarten und zumindest annähernd parallelen Wänden eingesetzt werden, indem dessen der Senke in der inneren Wand zugeordneter Endabschnitt durch die äußere Wand, die in der Senke für das Krafteinleitungselement bzw. dessen Teller einen entsprechenden Durchbruch aufweist, hindurch in die Senke der inneren Wand unter Zwischenlage einer Klebstoffschicht eingeführt werden kann.

Was die Tragstruktur für das am Kunststoff-Bauteil zu befestigende bzw. abzustützende genannte andere Bauelement betrifft, so kann diese entweder durch den Teller des Krafteinleitungselements selbst gebildet sein oder es kann an diesen Teller ein Befestigungselement angeformt sein und/oder es kann der genannte Steg des Krafteinleitungselements als Befestigungselement ausgeformt sein, beispielsweise indem dieser hohl ausgeführt und mit einem Gewinde zur Aufnahme einer Befestigungsschraube versehen ist. Selbstverständlich können der Teller und der Endabschnitt des Krafteinleitungselements auch durch mehrere Stege oder dergleichen miteinander verbunden sein.

Die beigefügte Prinzipdarstellung zeigt eine erfindungsgemäße Verbindungsanordnung im Schnitt. Dabei ist mit der Bezugsziffer 1 a die äußere Wand und mit der Bezugsziffer 1 b die innere Wand eines hier zweischaligen, ansonsten nicht weiter dargestellten Kunststoff-Bauteils 1 gekennzeichnet, bei welchem es sich um ein aus faserverstärktem Kunststoff geformtes Karosserie-Strukturteil eines Kraftfahrzeugs (Personenkraftwagens) handeln kann. An diesem Kunststoff-Bauteil 1 ist ein Krafteinleitungselement 2 durch Verkleben befestigt, an welchem über eine sog. Tragstruktur dieses Krafteinleitungselements 2 ein anderes Bauelement befestigt werden kann, so dass dieses nicht dargestellte andere Bauelement fest und dabei eine gute Kraftübertragung gewährleistend über das Krafteinleitungselement 2 mit dem Kunststoff-Bauteil 1 verbunden ist. Bei diesem anderen Bauelement kann es sich beispielsweise um einen Fahrschemel des Kraftfahrzeugs handeln, an dem radführende Lenker angelenkt sind. Selbstverständlich sind dann der Fahrschemel bzw. allgemein das andere Bauelement und das Karosserie-Strukturteil bzw. das Kunststoff-Bauteil 1 über eine Vielzahl solcher Krafteinleitungselemente 2 miteinander verbunden.

Zur Aufnahme eines Krafteinleitungselements 2 ist in jeder Wand 1 a, 1b eine Senke 3 (in der äußeren Wand 1 a) bzw. eine Senke 4 (in der inneren Wand 1 b) vorgesehen bzw. eingeformt, wobei als äußere Wand 1a diejenige Wand des Kunststoff-Bauteils 1 bezeichnet ist, die dem vorhergehend genannten anderen Bauelement, welches über das Krafteinleitungselement 2 am Kunststoffbauteil 1 befestigt wird, benachbart ist. Die innere Wand 1 b des Kunststoff-Bauteils 1 befindet sich dann auf der dem besagten anderen Bauelement abgewandten Seite der äußeren Wand 1a. Jede der genannten Senken 3, 4 ist vorliegend kegelstumpfförmig und im vorliegenden Ausführungsbeispiel aus einem geraden Kreiskegel hervorgehend und somit rotationssymmetrisch ausgebildet. In diesen Senken 3, 4 ist das Krafteinleitungselement 2 mit dem Kunststoff-Bauteil 2 verklebt, wobei die jeweilige Klebstoffschicht mit der Bezugsziffer 5 gekennzeichnet ist.

Das mit Ausnahme einer gegebenenfalls vorgesehenen Oberflächenbeschichtung in metallischem Werkstoff ausgeführte Krafteinleitungselement 2 weist einen an die Senke 4 in der inneren Wand 1 b angepassten und passgerecht in diese Senke 4 eingeklebten Endabschnitt 2b auf, vgl. hierzu die Klebstoffschicht 5. Dieser vorliegend also ebenfalls kegelstumpfförmige Endabschnitt 2b ist über einen Steg 2c mit einem an die Senke 3 in der äußeren Wand 1 a angepassten Teller 2a des Krafteinleitungselements 2 verbunden. Dieser in der Senke 3 mit einer Klebstoffschicht 5 an die äußere Wand 1a angeklebte Teller 2a ist solchermaßen geformt, dass er an der Kegel-Wand der kegelstumpfförmigen Senke 3 anliegt und weist daher zumindest auf seiner der äußeren Wand 1a zugewandten Seite ebenfalls die Form eines Kegelstumpfes auf. Vorliegend ist der Teller 2a nahezu praktisch vollständig an die Form der Senke 3 angepasst, indem nicht nur die der Wand 1a zugewande Seite des Tellers 2a der Form der Senke 3 folgt, sondern auch die der äußeren Wand 1 a abgewandte Seite des Tellers 2a solchermaßen geformt ist. Letzteres ist jedoch kein notwendiges Merkmal. Erfindungswesentlich hingegen ist, dass der Randbereich R des Tellers 2a auf der äußeren Wand 1 a im Umgebungsbereich der Senke 4, d.h. außerhalb derselben und diese vorliegend kreisringförmig umgebend aufgeklebt ist, vgl. hierzu die Klebstoffschicht 5. Gegenüber diesem ebenen Umgebungsbereich der äußeren Wand 1 verläuft die Kegelwand der Senke 4 im übrigen vorliegend unter einem Winkel in der Größenordnung von 45° geneigt, um beim Fügen der Klebeverbindung eine Scherbeanspruchung der Klebstoffschicht 5 zu vermeiden.

In das Kunststoff-Bauteil 1 eingesetzt werden kann das Krafteinleitungselement 2 von außen her gemäß Pfeilrichtung P, nachdem in die Senken 3, 4 sowie auf die äußere Wand 1 im Umgebungsbereich der dortigen Senke 3 eine Klebstoffschicht 5 aufgebracht wurde. Indem im Boden der Senke 3 der äußeren Wand ein ausreichend großer Durchbruch D vorgesehen ist, kann der Endabschnitt 2b des Krafteinleitungselements 2 mit dem Steg 2c durch diesen Durchbruch D von außen her und somit durch die äußere Wand 1a hindurchgeführt und in die Senke 4 in der inneren Wand 1b eingesetzt werden. Besonders vorteilhaft ist dabei, dass geringere Toleranz-Abweichungen in den einzelnen Bauteilabmessungen sowie Lagetoleranzen durch die eine gewisse Dicke aufweisende und beim Fügen plastisch verformbare Klebstoffschicht 5 ausgeglichen werden können.

Was die am Krafteinleitungselement 2 vorgesehene Tragstruktur für das über dieses Krafteinleitungselement 2 mit dem Kunststoff-Bauteil 1 zu verbindende nicht dargestellte, jedoch bereits mehrfach genannte andere Bauelement (bspw. Fahrschemel) betrifft, so ist diese Tragstruktur vorliegend unter anderem durch den Steg 2c gebildet, wobei gleichzeitig der Teller 2a als Tragstruktur fungiert. Es ist nämlich wie dargestellt in den Steg 2c eine sich in dessen Längsrichtung erstreckende Bohrung B und in diese ein Gewinde eingebracht, so dass in diesen somit hohlen Steg 2c eine Befestigungsschraube (bzw. allgemein ein Befestigungselement) eingedreht bzw. allgemein eingebracht werden kann. Zwischen dem Kopf dieser nicht gezeigten Befestigungsschraube und der die Eintrittsöffnung der Bohrung im Steg 2c umgebenden Oberfläche O des Tellers 2a kann eine Öse oder ein anderer geeignet gestalteter Abschnitt des genannten anderen Bauelements eingespannt sein.

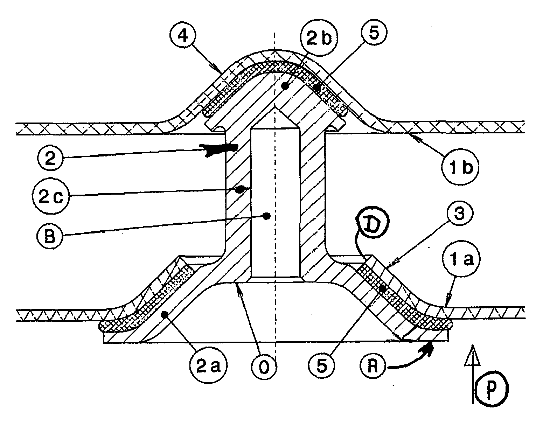

## Patentansprüche

1. Verbindungsanordnung zwischen einem Kunststoff-Bauteil (1) mit zumindest zwei einander benachbarten und zumindest annähernd parallelen Wänden (1a, 1b) und einem anderen Bauelement, mit zumindest einem über eine Klebeverbindung (5) am Kunststoff-Bauteil (1) in kegelstumpfförmigen oder kugelsegmentförmigen Senken (3, 4) in den einander benachbarten Wänden (1a, 1b) des Kunststoff-Bauteils (1) mit diesem verklebten Krafteinleitungselement (2), welches eine Tragstruktur aufweist oder bildet, an welcher das andere Bauelement befestigbar ist,
**dadurch gekennzeichnet, dass** das mit Ausnahme einer ggf. vorgesehenen Beschichtung nur aus metallischem Werkstoff bestehende Krafteinleitungselement (2) einen an die kegelstumpfförmige oder kugelsegmentförmige Senke (3) in der dem anderen Bauelement benachbarten äußeren Wand (1a) des Kunststoff-Bauteils (1) angepassten und somit in dieser Senke (3) unter Zwischenlage einer Klebstoffschicht (5) an der äußeren Wand des Kunststoff-Bauteils (1) außenseitig anliegenden und dem anderen Bauelement zugewandten Teller (2a) aufweist,
dessen Rand (R) unter Zwischenlage von Klebstoff (5) auf der äußeren Wand (1 a) im Umgebungsbereich der Senke (3) aufliegt,
wobei der Teller (2a) über einen Steg (2c) mit einem an die kegelstumpfförmige oder kugelsegmentförmige Senke (4) in der anderen, inneren Wand (1b) des Kunststoff-Bauteils (1) angepassten Endabschnitt (2b) des Krafteinleitungselements (2) verbunden ist,
und dass weiterhin die Senke (3) in der äußeren Wand (1a) jedenfalls soweit ohne Boden ausgeführt ist, dass der Endabschnitt (2b) des Krafteinleitungselements (2) durch die äußere Wand (1a) hindurch in die Senke (4) der inneren Wand (1b) unter Zwischenlage einer Klebstoffschicht (5) einsetzbar ist,
und dass weiterhin die Tragstruktur an den Teller (2a) und/oder in den Steg (2c) des Krafteinleitungselements (2) geformt ist.

2. Verbindungsanordnung nach Anspruch 1, **dadurch gekennzeichnet, dass** die Tragstruktur durch den für die Aufnahme eines Befestigungselementes hohl ausgeführten Steg (2c) gebildet ist.

3. Verbindungsanordnung nach Anspruch 1 oder 2 **dadurch gekennzeichnet, dass** die der äußeren Wand (1a) abgewandte Seite des Tellers (2a) ebenfalls kegelstumpfförmig oder kugelsegmentförmig ist.

## Claims

1. A connection arrangement between a plastics component (1) having at least two walls (1 a, 1 b) which are adjacent to one another and are at least approximately parallel, and another component, comprising at least one force introduction element (2) which is adhesively bonded to the plastics component (1) by an adhesive bond (5) on the plastics component (1) in depressions (3, 4) in the form of truncated cones or spherical segments in the mutually adjacent walls (1 a, 1 b) of the plastics component (1) and which has or forms a support structure to which the other component can be attached,
**characterised in that** the force introduction element (2), consisting only of metallic material with the exception of an optionally provided coating has a plate (2a) which is adapted to the truncated cone-shaped or spherical segment-shaped depression (3) in the outer wall (1a), adjacent to the other component, of the plastics component (1) and which thereby rests outside on the outer wall of the plastics component (1) in this depression (3) with the interposition of an adhesive layer (5) and faces the other component,
the edge (R) of said plate rests on the outer wall (1a) in the surrounding area of the depression (3) with an intermediate layer of adhesive (5), the plate (2a) being connected by a web (2c) to an end portion (2b) of the force introduction element (2), said end portion being adapted to the truncated cone-shaped or spherical segment-shaped depression (4) in the other inner wall (1 b) of the plastics component (1),
and furthermore **in that** the depression (3) in the outer wall (1a) is configured in any case without a bottom to such an extent that the end portion (2b) of the force introduction element (2) can be inserted through the outer wall (1a) into the depression (4) in the inner wall (1b) with the interposition of an adhesive layer (5),
and furthermore **in that** the support structure is formed on the plate (2a) and/or in the web (2c) of the force introduction element (2).

2. A connection arrangement according to claim 1, **characterised in that** the support structure is formed by the web (2c) which is configured to be hollow to receive a fastening element.

3. A connection arrangement according to claim 1 or claim 2, **characterised in that** the side of the plate (2a) remote from the outer wall (1a) is also in the form of a truncated cone or of a spherical segment.

## Revendications

1. Dispositif permettant la liaison d'une pièce en matériau synthétique (1) ayant au moins deux parois (1a, 1b) voisines et au moins approximativement parallèles et d'une autre pièce avec au moins un élément d'application d'une de force (2) collé à la pièce en matériau synthétique (1) par une liaison par collage (5) au niveau de renfoncements (3, 4) en forme de troncs de cône ou de segments de sphère situés dans les parois voisines (1a, 1b) de cette pièce en matériau synthétique (1) et qui présente ou forme une structure support sur laquelle peut être fixée l'autre pièce,
**caractérisé en ce que**
l'élément d'application d'une force (2) réalisé uniquement en un matériau métallique à l'exception d'un revêtement le cas échéant prévu, comporte un plateau (2) adapté au renfoncement (3) en forme de tronc de cône ou de segment sphérique situé dans la paroi externe (1a) de la pièce en matériau synthétique (1) voisine de l'autre pièce, et s'appliquant ainsi extérieurement contre la paroi externe de la pièce en matériau synthétique (1) dans ce renfoncement (3), avec interposition d'une couche de colle (5), et tourné vers l'autre pièce, plateau (2a) dont le bord (R) s'applique, avec interposition d'une colle (5) sur la paroi externe (1a) dans la zone environnante du renfoncement (3),
le plateau (2a) étant relié par l'intermédiaire d'une barrette (2c) avec un segment d'extrémité (2b) de l'élément d'application d'une force (2) adapté au renfoncement (4) en forme de tronc de cône ou de segment de sphère (4) situé dans l'autre paroi interne (b) de la pièce en matériau synthétique (1), et
en outre, le renfoncement (3) situé dans la paroi externe (1a) est dans tous les cas réalisé sans fond de sorte que le segment d'extrémité (2b) de l'élément d'application d'une force (2) puisse être logé en passant au travers de la paroi externe (1a) dans le renfoncement (4) de la paroi interne (1b) avec interposition d'une couche de colle (5), et
la structure support est en outre formée sur le plateau (2a) et/ou dans la barrette (2c) de l'élément d'application d'une force (2).

2. Dispositif de liaison conforme à la revendication 1,
**caractérisé en ce que**
la structure support est formée par la barrette (2c) qui est réalisée creuse pour permettre de recevoir un élément de fixation.

3. Dispositif de liaison conforme à la revendication 1 ou 2,
**caractérisé en ce que**
la face du plateau (2a) située à l'opposé de la paroi externe (1a) est également en forme de tronc de cône ou de segment de sphère.
